# EUROPÄISCHE PATENTSCHRIFT

(11) **EP 1 053 094 B1**
(45) Veröffentlichungstag und Bekanntmachung des Hinweises auf die Patenterteilung: **09.10.2002**
(21) Anmeldenummer: 99907451.1
(22) Anmeldetag: 29.01.1999
(51) Int. Cl.: B29C 70/22

(54) **FLACHMATERIALSTREIFEN UND VERFAHREN ZUR HERSTELLUNG VON FASERVERBUNDWERKSTÜCKEN MIT DERARTIGEN FLACHMATERIALSTREIFEN**
FLAT MATERIAL STRIP AND METHOD FOR PRODUCING FIBRE COMPOSITE WORKPIECES WITH SUCH FLAT MATERIAL STRIPS
BANDE DE MATERIAU PLAT ET PROCEDE POUR LA PRODUCTION DE PIECES COMPOSITES ARMEES DE FIBRES AVEC DE TELLES BANDES DE MATERIAU PLAT

(30) Priorität: 30.01.1998 DE 19803744
(43) Veröffentlichungstag der Anmeldung: 22.11.2000
(73) Patentinhaber: Deutsches Zentrum für Luft- und Raumfahrt e.V., 51147 Köln (DE)
(72) Erfinder: KOCIAN, Frank, D-72666 Neckartailfingen (DE); WUNSCH, Markus, D-70569 Stuttgart (DE)
(74) Vertreter: Beck, Jürgen, Dr. Dipl.-Phys.
(86) Internationale Anmeldenummer: EP9900579
(87) Internationale Veröffentlichungsnummer: WO99038671

(56) Entgegenhaltungen:
- DE-A- 2 314 172
- DE-A- 3 042 539
- PATENT ABSTRACTS OF JAPAN vol. 014, no. 107 (M-0942), 27. Februar 1990 & JP 01 310942 A (TEKUNOSUTAA:KK), 15. Dezember 1989

## Beschreibung

Die Erfindung betrifft einen Flachmaterialstreifen zur Herstellung von Faserverbundwerkstücken durch Auslegen desselben auf formgebenden Flächen, umfassend in definierter Orientierung zu einer Längsrichtung des Flachmaterialstreifens in einer Streifenfläche nebeneinanderliegend angeordnete Verstärkungsfasern, die miteinander zu einer Matte verbunden sind, sowie mindestens eine in Längsrichtung verlaufende, im wesentlichen undehrbare Verlegehilfsfaser. Ferner betrifft die Erfindung ein Verfahren zum Herstellen eines Faserverbundwerkstücks.

Derartige Flachmaterialstreifen sind aus dem Stand der Technik bekannt (siehe z.B. DE-A-3 042 539). Bei diesen werden beispielsweise sämtliche Verstärkungsfasern parallel zueinander in Längsrichtung ausgelegt, wobei die gesamten, in der Längsrichtung durchgehend verlaufenden Verstärkungsfasern dem Flachmaterialstreifen in der Längsrichtung eine derartige Dehnungssteifigkeit verleihen, so daß ein Auslegen oder drapieren eines derartigen Flachmaterialstreifens bei einer Abweichung von dem sogenannten natürlichen Pfad mit erheblichen Schwierigkeiten verbunden ist, da ein Auslegen des Flachmaterialstreifens dergestalt, daß in einem Außenkonturbereich die eine Außenkontur länger ist als die andere, dazu führt, daß sich dies als Verschiebung der Verstärkungsfasern relativ zueinander durch den gesamten Flachmaterialstreifen fortsetzt, so daß eine besondere Vorrichtung zum Auslegen derartiger Flachmaterialstreifen erforderlich ist, welche den Flachmaterialstreifen sozusagen "schubverformt", das heißt die in der Längsrichtung verlaufenden Verstärkungsfasern relativ zueinander verschiebt.

Der Erfindung liegt daher die Aufgabe zugrunde, einen Flachmaterialstreifen der gattungsgemäßen Art derart zu verbessern, daß dieser sich leicht drapieren läßt, das heißt, daß dieser sich leicht auch auf komplex geformten Flächen, beispielsweise zweifach gekrümmten Flächen, auslegen läßt.

Diese Aufgabe wird erfindungsgemäß durch einen Flachmaterialstreifen nach Patentanspruch 1 sowie durch ein Verfahren zum Herstellen eines Faserverbundwerkstücks nach Patentanspruch 19 gelöst.

Vorteilhafte Weiterbildungen der Erfindung sind Gegenstand der betreffenden abhängigen Ansprüche.

Der Vorteil der erfindungsgemäßen Lösung ist der, daß die Verlegehilfsfaser bewirkt, daß der Flachmaterialstreifen in dem Streifenbereich im wesentlichen in Längsrichtung undehnbar ist, jedoch seitlich des Streifenbereichs in Längsrichtung dehnbar ist und somit die Moglichkeit hat, sich unterschiedlichen Flächenverhältnissen anzupassen, zumindest insoweit, als diese Flächenverhältnisse gegenüber dem Streifenbereich, in welchem die Verlegehilfsfaser verläuft, eine lokale Dehnung der Matte erforderlich machen, das heißt beispielsweise Längendifferenzen in den Außenkonturen notwendig machen.

Der Vorteil der erfindungsgemäßen Lösung ist somit darin zu sehen, daß einerseits der Flachmaterialstreifen leicht auslegbar ist, da die Verlegehilfsfaser in der Längsrichtung die erforderliche Zugfestigkeit und Dehnungssteifigkeit gewährleistet, andererseits aber die lokale Dehnbarkeit der Matte in Längsrichtung außerhalb des Streifenbereichs die Möglichkeit eröffnet, daß sich die Matte in optimaler Weise an die Geometrie des Faserverbundwerkstücks durch lokale Dehnung anpassen kann, da die Verlegehilfsfaser nur in dem Streifenbereich, in dem sich diese erstreckt, eine Dehnung der Matte in der Längsrichtung verhindert.

Der Streifenbereich kann quer zur Längsrichtung des Flachmaterialstreifens gesehen, unterschiedlich angeordnet sein.

So sieht eine vorteilhafte Lösung vor, daß der Streifenbereich nahe einer Außenkontur des Flachmaterialstreifens liegt, so daß der gesamte zwischen dem Streifenbereich und der gegenüberliegenden Außenkontur liegende Bereich der Matte in Längsrichtung lokal gedehnt werden kann, wenn dies zur Anpassung an eine vorgesehene Geometrie erforderlich ist.

Alternativ zum Positionieren des Streifenbereichs nahe einer Außenkontur sieht ein anderes vorteilhaftes Ausführungsbeispiel vor, daß der Streifenbereich ungefähr in einem mittigen Bereich zwischen den Außenkonturen des Flachmaterialstreifens liegt, so daß beiderseits des Streifenbereichs die Matte zur Anpassung an die jeweilige Flächenform lokal in der Längsrichtung dehnbar ist.

Hinsichtlich der vorgesehenen Verlegehilfsfaser wurde im Zusammenhang mit den vorstehenden Ausführungsbeispielen keine näheren Angaben gemacht. So ware es beispielsweise denkbar, nicht nur eine, sondern mehrere Verlegehilfsfasern innerhalb des Streifenbereichs vorzusehen. Da jedoch die Zugbelastung des Flachmaterialstreifens beim Auslegen oder Drapieren desselben gering ist, sieht eine besonders günstige Lösung vor, daß in dem Streifenbereich eine einzige Verlegehilfsfaser verläuft.

Besonders günstig ist es dabei, wenn sich die Verlegehilfsfaser durchgehend über die gesamte Länge des jeweils eingesetzten Flachmaterialstreifens erstreckt.

Alternativ dazu ist es aber auch denkbar, mehrere lange, nebeneinanderliegende Verlegehilfsfasern einzusetzen, deren Länge jedoch geringer ist als die des gesamten Flachmaterialstreifens, wobei beispielsweise bei ausreichender Überlappung aneinanderliegende, gegebenenfalls durch Bettungsmaterial miteinander verklebte Verlegehilfsfasern eine ausreichende Zugfestigkeit in der Längsrichtung gewährleisten, so daß eine Längsdehnung des Flachmaterialstreifens über seine gesamte Länge hinweg vermieden werden kann.

Die die Matte bildenden Verstärkungsfasern können dabei in unterschiedlichster Art und Weise angeordnet sein. Besonders leicht ist eine Dehnbarkeit der Matte dann erreichbar, wenn die Verstärkungsfasern als in der Matte ungefähr parallel zueinander verlaufende Verstärkungsfaserstücke angeordnet sind. Bei derartigen Verstärkungsfaserstücken erleichtert bereits deren begrenzte Länge, diese relativ zueinander zu verschieben und somit die lokale Dehnbarkeit in der Längsrichtung herbeizuführen.

Eine Möglichkeit, diese Dehnbarkeit in der Längsrichtung herbeizuführen, wäre beispielsweise die, daß die Matte relativ kurze Verstärkungsfaserstücke aufweist, die alle ungefähr parallel zueinander in Längsrichtung angeordnet sind, jedoch aufgrund ihrer begrenzten Länge in einfacher Weise durch lokale Schubverformung relativ zueinander der Matte eine lokale Dehnbarkeit in Längsrichtung verleihen. Beispielsweise lassen sich derartige Verstärkungsfasern zu einer Matte dadurch vereinigen, daß diese noch durch zusätzliche quer zur Längsrichtung verlaufende Einbindefasern miteinander verbunden sind.

Eine andere vorteilhafte Lösung sieht vor, daß die Verstärkungsfasern in der Matte in einer Richtung quer zur Längsrichtung verlaufen. In einem derartigen Fall besteht die Möglichkeit, lokale Dehnungen in der Längsrichtung zu erzeugen, in einfacher Weise darin, daß in diesen lokalen Bereichen der Abstand der Verstärkungsfasern relativ zueinander vergrößert wird.

Eine besonders günstige Möglichkeit, eine erfindungsgemäße Matte mit lokaler Dehnbarkeit in Längsrichtung herzustellen sieht vor, daß die Matte eine erste Schar von ersten Verstärkungsfaserstücken aufweist, die alle bei in seiner Längsrichtung geradegerichtet verlaufendem Flachmaterialstreifen mit der Längsrichtung im wesentlichen denselben positiven spitzen Winkel einschließen und daß die Matte eine zweite Schar von zweiten Verstärkungsfaserstücken aufweist, die alle bei in seiner Längsrichtung geradegerichtet verlaufendem Flachmaterialstreifen mit der Längsrichtung im wesentlichen denselben negativen spitzen Winkel einschließen. Der Vorteil dieser Lösung ist darin zu sehen, daß die Matte aus zwei Scharen von in unterschiedlichen Richtungen quer zur Längsrichtung verlaufenden Verstärkungsfaserstücken aufweist, die einander an Kreuzungsstellen überkreuzen und somit im Bereich dieser Kreuzungsstelen relativ leicht zueinander bewegbar sind, wobei bei ausreichender Eigensteifigkeit der Verstärkungsfasern in ihrer Längsrichtung und quer zu ihrer Längsrichtung die Verstärkungsfasern nicht nur voneinander weg sondern auch aufeinander zu bewegbar sind.

Dabei ist unter einem spitzen Winkel ein Winkel zwischen 0° und 90° zu verstehen.

Besonders vorteilhaft ist es dabei, wenn die Verstärkungsfaserstücke der ersten Schar in der Längsrichtung gesehen aufeinanderfolgend im Abstand voneinander angeordnet sind, das heißt nicht über ihre gesamte Erstreckung in Faserlängsrichtung aneinander anliegen.

Noch vorteilhafter ist es, wenn auch die Verstärkungsfaserstücke der zweiten Schar in der Längsrichtung gesehen mit definiertem Abstand aufeinanderfolgend angeordnet sind, so daß auch bezüglich der zweiten Schar nebeneinanderliegende Verstärkungsfaserstücke nicht über die gesamte Faserlängsrichtung aneinander anliegen.

Bei derart mit Abstand voneinander angeordneten Verstärkungsfaserstücken ist deren Beweglichkeit relativ zueinander größer, so daß zum Verschieben der Verstärkungsfasern relativ zueinander geringere Kräfte erforderlich sind, als bei der aus dem Stand der Technik bekannten Schubverformung.

Die ersten Verstärkungsfaserstücke können sich beispielsweise lediglich über eine Teilbreite des Flachmaterialstreifens erstrecken und außerdem mit weiteren ersten Verstärkungsfaserstücken in Kontakt stehen. Eine besonders günstige Lösung, insbesondere hinsichtlich der späteren Wirkung der Verstärkungsfaserstücke in dem Faserverbundwerkstück sieht vor, daß die ersten Verstärkungsfaserstücke von einer Außenkontur des Flachmaterialstreifens zur gegenüberliegenden Außenkontur verlaufen.

Besonders vorteilhaft ist es auch, wenn die zweiten Verstärkungsfaserstücke von einer Außenkontur des Flachmaterialstreifens zur gegenüberliegenden Außenkontur verlaufen.

Damit ist eine möglichst große, ohnehin durch die Breite des Flachmaterialstreifens begrenzte Länge der Verstärkungsfaserstücke vorgegeben, die dann für eine ausreichende Verstärkung, insbesondere im Hinblick auf Zugbelastungen, des Faserverbundwerkstücks verantwortlich sind.

Prinzipiell könnten die Verstärkungsfaserstücke Abschnitte von durchgehend verlaufenden Verstärkungsfasern sein. Eine herstellungstechnisch besonders günstige Lösung sieht vor, daß jedes Verstärkungsfaserstück an den beiden gegenüberliegenden Außenkonturen endet.

Hinsichtlich der Verbindung der ersten und zweiten Verstärkungsfaserstücke in der Matte wurden bislang keine näheren Angaben gemacht. So sieht ein vorteilhaftes Ausführungsbeispiel vor, daß die Verstärkungsfasern webtechnisch miteinander verbunden sind, so daß damit bereits die Möglichkeit eröffnet ist, die Matte so zu gestalten, daß die Matte mit den Verstärkungsfaserstücken in sich zusammenhält.

Um auch sicherzustellen, daß die Verlegehilfsfaser mit der Matte verbunden und insbesondere relativ zu dieser in der einmal vorgesehenen Orientierung verbleibt, ist vorzugsweise vorgesehen, daß die Verstärkungsfasern mit der Verlegehilfsfaser webtechnisch verbunden sind.

Prinzipiell wäre es ausreichend, die Verstärkungsfasern webtechnisch miteinander zu verbinden. Noch besser ist die Verbindung derselben jedoch dann, wenn die Verstärkungsfasern durch eine Bettungsmasse miteinander verbunden sind.

Noch besser läßt sich auch die Verbindung zwischen der Verlegehilfsfaser und der Matte dann gestalten, wenn diese mit den Verstärkungsfasern mittels einer Bettungsmasse verbunden ist.

Die Bettungsmasse kann dabei als nachträglich auf den Flachmaterialstreifen aufgetragene Bettungsmasse vorgesehen sein. Es ist aber auch möglich, die Verstärkungsfasern und gegebenenfalls auch noch die Verlegehilfsfaser mit der Bettungsmasse vor einem Auslegen des Flachmaterialstreifens zu imprägnieren.

Besonders günstig ist es dabei, wenn die Bettungsmasse ein Matrixmaterial des späteren Faserverbundwerkstücks bildet.

Beispielsweise können derartige Bettungsmassen thermoplastische oder duroplastische Bettungsmassen, beispielsweise Harzmassen sein.

Bei dem Verfahren zum Herstellen eines Faserverbundwerkstücks ist der Flachmaterialstreifen so auszulegen, daß die Verstärkungsfasern im letztlich hergestellten Faserverbundwerkstück so orientiert sind, daß die Belastungen desselben zu einer Zugbelastung führen, für deren Aufnahme die Verstärkungsfasern geeignet sind.

Hier kommt ein weiterer großer Vorteil der erfindungsgemäßen Lösung zum Tragen, nämlich der, daß die Drapierung oder das Auslegen der Flachmaterialstreifen entsprechend der Orientierung der Verstärkungsfasern in der Matte erfolgen kann. Bei dem erfindungsgemäßen Flachmaterialstreifen muß keine Rücksicht darauf genommen werden, längs welcher Bahnen der Flachmaterialstreifen überhaupt verlegt werden kann, ohne daß übergroße Schubverformungen erforderlich sind oder ohne daß sich die Schubverformungen extrem akkumulieren und über die Länge des Flachmaterialstreifens aufsummieren, so daß sie letztlich nicht mehr von dem Flachmaterialstreifen aufgenommen werden können. Die Berücksichtigung all derartiger Gesichtspunkte entfällt bei dem erfindungsgemäßen Flachmaterialstreifen, da dieser aufgrund der vorhandenen Matte ausdrücklich so ausgelegt ist, daß dieser in der Lage ist, sich über lokal begrenzte Deformationen in Längsrichtung an beliebige Flachen anzupassen, ohne daß sich diese Verformungen akkumulieren und in geradegerichtete Bereiche, in denen derartige Verformungen in der Längsrichtung nicht erforderlich sind, fortsetzen.

Eine vorteilhafte Lösung sieht dabei vor, daß der Flachmaterialstreifen so ausgelegt wird, daß eine Dehnung der Matte in der Längsrichtung nur im Bereich einer der Außenkonturen erforderlich ist, so daß bei diesem Ausführungsbeispiel vorzugsweise der Streifenbereich nahe der Außenkontur liegt, die nicht gedehnt werden soll.

Ferner sieht ein alternatives Ausführungsbeispiel der erfindungsgemäßen Lösung vor, daß die auf einer Seite des Streifenbereichs liegende Außenkontur zumindest abschnittsweise eine Dehnung erfährt, während die auf der anderen Seite des Streifenbereichs liegende Außenkontur zumindest abschnittsweise eine Verkürzung erfährt. Dies ist in Grenzen dadurch realisierbar, daß die Verstärkungsfaserstücke in sich eine ausreichende Steifigkeit in ihrer Längsrichtung und gegen Biegungen quer zur Längsrichtung aufweisen und somit sich im Bereich einer Innenseite eines gebogenen Abschnitts des Flachmaterialstreifens in Richtung einer Verringerung ihres relativen Abstandes aufeinander zu bewegen, wobei die Steifigkeit so groß sein muß, daß die von der Klebewirkung der Bettungsmasse ausgeübten Kräfte überwunden werden können.

Einige Ausführungsbeispiele der Erfindung sind in der Zeichnung dargestellt und werden in folgenden näher beschrieben.

In der Zeichnung zeigen:
- Fig. 1: ein Beispiel eines Ablegekerns, auf welchen Flachmaterialstreifen zur Bildung eines Faserverbundwerkstücks aufgelegt werden;
- Fig. 2: einen in der Ebene dargestellten Verlauf der Flachmaterialstreifen für den in Fig. 1 dargestellten Ablegekern;
- Fig. 3: ein erstes Ausführungsbeispiel eines erfindungsgemäßen Flachmaterialstreifens;
- Fig. 4: eine Darstellung einer Möglichkeit des Drapierens des ersten Ausführungsbeispiels des erfindungsgemäßen Flachmaterialstreifens;
- Fig. 5: ein zweites Ausführungsbeispiel eines erfindungsgemäßen Flachmaterialstreifens und
- Fig. 6: ein Ausführungsbeispiel für eine Möglichkeit des Drapierens des zweiten Ausführungsbeispiels des erfindungsgemäßen Flachmaterialstreifens.

Flachmaterialstreifen der erfindungsgemäßen Art werden unter anderem auch dazu eingesetzt, Faserverbundwerkstücke herzustellen, die komplexe Formen, beispielsweise zweifach gekrümmten Flächen, aufweisen.

Ein Beispiel für eine derartige komplexe Form ist beispielsweise ein als Ganzes mit 10 bezeichneter Ablegekern, welcher als ersten Oberflächenbereich eine kreiszylindrische Ringfläche 12 aufweist und als zweiten Oberflächenbereich eine Kugelkappe 14. Dieser Ablegekern 10 dient beispielsweise dazu, Hohlkappen von Druckbehältern herzustellen, wobei hierzu Flachmaterialstreifen 20 in unterschiedliche Richtungen verlaufend und in mehreren Lagen auf den Ablegekern 10 aufgelegt und in eine Bettungsmasse eingebettet werden, so daß nach Aushärten der Bettungsmasse ein aus den mehreren Lagen der Flachmaterialstreifen 20 und der Bettungsmasse gebildetes Faserverbundwerkstück 22 von dem Ablegekern 10 abnehmbar ist.

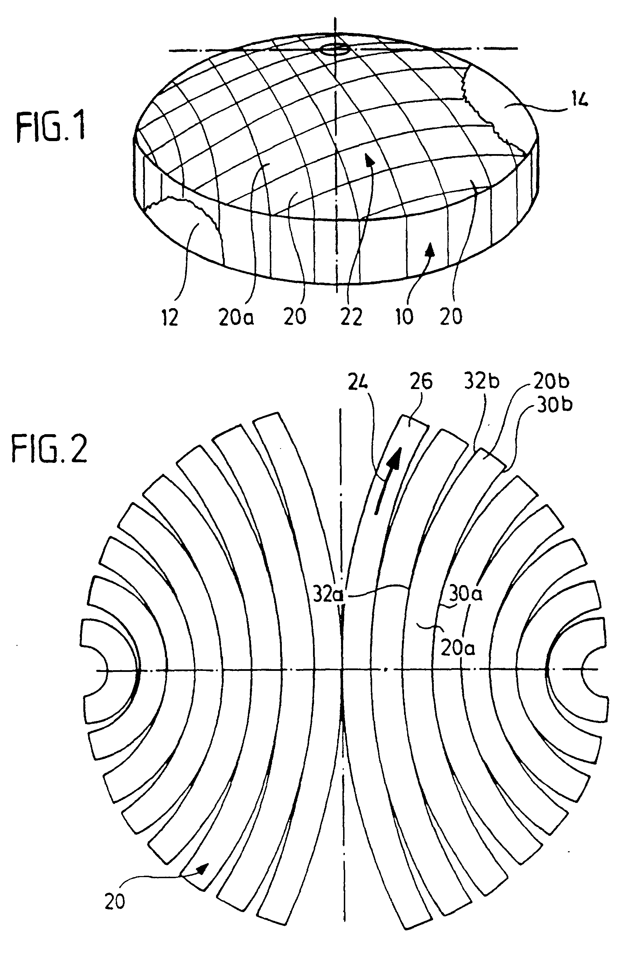

Der beispielhafte Verlauf der Flachmaterialstreifen 20 beim Auflegen auf den Ablegekern 10 ist dabei in Fig. 2 in Abwicklung dargestellt, wobei erkennbar ist, daß jeder sich in seiner Längsrichtung 24 erstreckende Flachmaterialstreifen 20 nach einem flächenhaften Auflegen auf die Kugelkappe 14 in einem Abschnitt 20a unterschiedliche Längen einander gegenüberliegender Außenkonturabschnitte 30a und 32a aufweist, während in einem Abschnitt 20b des Flachmaterialstreifens 20, welcher auf der Ringfläche 12 aufliegt, die Außenkonturabschnitte 30b und 32b ungefähr gleich lang sind.

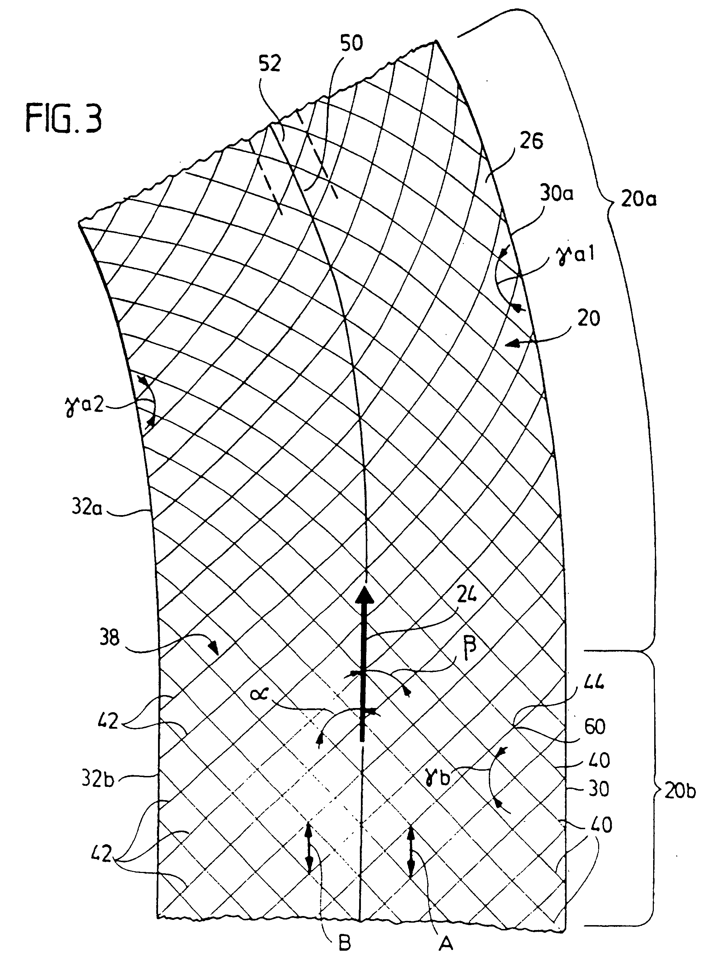

Ein erstes Ausführungsbeispiel eines erfindungsgemäßen Flachmaterialstreifens, welcher flächenhaft aufliegend in einer derartigen Art und Weise auslegbar, das heißt drapierbar, ist, ist in Vergrößerung ausschnittsweise in Fig. 3 dargestellt.

Der erfindungsgemäße Flachmaterialstreifen 20 weist dabei eine erste Schar von ersten Verstärkungsfaserstücken 40 auf, welche sich in einem geradegerichtet verlaufenden Abschnitt 20b mit einem ersten spitzen und positiven Winkel α quer zur Längsrichtung 24 in der Streifenfläche 26 erstrecken und in der Längsrichtung 24 aufeinanderfolgend, beispielsweise mit einem konstanten Abstand A, angeordnet sind.

Des weiteren umfaßt der Flachmaterialstreifen 20 eine zweite Schar zweiter Faserstücke 42, welche in dem geradegerichtet verlaufenden Abschnitt 20b mit der Längsrichtung 24 einen negativen Winkel β einschließen, wobei beispielsweise der negative Winkel β betragsmäßig gleich groß ist als der positive Winkel α.

Auch die zweite Schar von zweiten Faserstücken 42 ist in der Längsrichtung 24 aufeinanderfolgend angeordnet, wobei jeweils aufeinanderfolgende Faserstücke 42 der zweiten Schar in der Längsrichtung 24 einen Abstand B voneinander aufweisen.

Die ersten und zweiten Verstärkungsfaserstücke bilden, da sie miteinander verwoben sind eine Matte 38, welche sich in der Streifenfläche 26 erstreckt.

In dem geradegerichteten Abschnitt 20b sind außerdem die Außenkonturabschnitte 30b und 32b ebenfalls gleich lang.

Erfolgt nun eine Deformation des Flachmaterialstreifens 20 beim Drapieren, beispielsweise in der in Fig. 3 dargestellten Zeichenebene durch ein Umbiegen der Längsrichtung 24 so ist in einem derartigen gekrümmten Abschnitt 20a des Flachmaterialstreifens 20 der Außenkonturabschnitt 32a kürzer als der Außenkonturabschnitt 30a. Dies ist entweder dadurch erreichbar, daß eine Dehnung oder Längung des Außenkonturabschnitts 30a relativ zum Außenkonturabschnitt 32a erfolgt und zusätzlich zu der Längung oder Dehnung des Außenkonturabschnitts 30a eine Verkürzung des Außenkonturabschnitts 32a.

Die Längenänderungen der Außenkonturabschnitte 32a und 30a sind jedoch nur dadurch möglich, daß in diesem Fall die Faserstücke 40 und 42 nicht mehr geradegerichtet, wie in geradegerichteten Abschnitt 20b und im Winkel α bzw. β zur Längsrichtung 24 verlaufen, sondern zumindest abschnittsweise gekrümmt, wie in Fig. 3 dargestellt.

Längenänderungen in den Außenkonturabschnitten 30a und 32a sind jedoch nur dadurch möglich, daß ein Winkel γ zwischen den ersten Faserstücken 40 und den zweiten Faserstücken 42 im geradegerichteten Abschnitt 20b die Größe γb aufweist, jedoch im gekrümmten Abschnitt 20a nahe den jeweiligen Außenkonturabschnitten 30a und 32a unterschiedlichen Werte einnehmen kann, nämlich beispielsweise die Größe γa2 und γa1, wobei im Bereich des längeren Außenkonturabschnitts 30a der entsprechende Winkel γa1 größer ist als der Winkel γa2 im Bereich des kürzeren Außenkonturabschnitts 32a, dadurch sind lokale Dehnungen und Kontraktionen der Matte 38 möglich.

Da im Außenkonturabschnitt 32a noch eine Verkürzung gegenüber dem geradegerichteten Abschnitt 20b eintritt, ist der Winkel γa2 kleiner als γb, außerdem ist der Winkel γa1 im längeren Bereich des Außenkonturabschnitts 30a größer als γb.

Der erfindungsgemäße Flachmaterialstreifen hat jedoch aufgrund der Möglichkeit, den Winkel γ zwischen den Verstärkungsfaserstücken 40 und 42 variabel zu gestalten, eine lokale Längenveränderbarkeit, die es nicht erlaubt, den Flachmaterialstreifen 20 mit Zug in Längsrichtung 24 auszulegen, da der Flachmaterialstreifen 20, sofern er lediglich aus den Verstärkungsfaserstücken 40 und 42 zusammengesetzt wäre, zu einem Verziehen in Längsrichtung neigt.

Aus diesem Grund ist der erfindungsgemäße Flachmaterialstreifen 20 zusätzlich mit einer Verlegehilfsfaser 50 versehen, die bei dem ersten Ausführungsbeispiel in einem mittigen Streifenbereich 52 des Flachmaterialstreifens 20 in dessen Längsrichtung 24, stets ungefähr mittig zwischen den Außenkonturen 30 und 32 verläuft und mit den Verstärkungsfaserstücken 40 und 42 verbunden ist. Damit wirkt sich die Verlegehilfsfaser 50 aufgrund der Tatsache, daß diese zumindest im wesentlichen längeninvariant ist, für die Verbindung der Verstärkungsfaserstücke 40 und 42 mit der Verlegehilfsfaser 50 dahingehend aus, daß deren Abstände A und B im Streifenbereich 52 im wesentlichen konstant bleiben, so daß in dem gekrümmten Abschnitt 20a einerseits des Streifenbereichs 52 die Abstände A und B vergrößert werden, nämlich ausgehend von dem Streifenbereich 52 quer zur Längsrichtung 24 in zunehmendem Maße bis zum Außenkonturabschnitt 30a und andererseits des Streifenbereichs 52 die Abstände A und B verkleinert werden, nämlich ausgehend von dem Streifenbereich 52 quer zur Längsrichtung 24 in zunehmendem Maß bis zum Außenkonturabschnitt 32a, wobei die Vergrößerung und Verkleinerung der Abstände A und B einhergeht mit einer Vergrößerung oder Verkleinerung des Winkels γ.

Vorzugsweise sind die Verstärkungsfaserstücke 40 und 42 sowie auch die Verlegehilfsfaser 52 einerseits webtechnisch miteinander verbunden und im übrigen bereits vor deren Auslegen mit einer Bettungsmasse versehen, welche eine zusätzliche Verbindung zwischen den Verstärkungsfaserstücken 40 und 42 untereinander und der Verlegehilfsfaser 50 schafft.

Da die ersten Verstärkungsfaserstücke 40 und die zweiten Verstärkungsfaserstücke 42 aufgrund ihrer Orientierung relativ zur Längsrichtung 24 sich jeweils an Kreuzungsstellen 44 berühren und durch die Bettungsmasse noch zusätzlich eine Verbindung erfahren, ansonsten aber gegeneinander beweglich sind, behindert die Bettungsmasse aufgrund ihrer Zähigkeit im Bereich der Kreuzungsstellen 44 eine Veränderung des Winkels γ zwischen dem jeweils ersten Verstärkungsfaserstück 40 und dem jeweils zweiten Verstärkungsfaserstück 42 nur in geringem Maße, so daß sich in einzelnen Bereichen des Flachmaterialstreifens die bei geradegerichteten Flachmaterialstreifen vorliegenden Abstände A und B zwischen den Verstärkungsfaserstücken 40 bzw. 42 nur mit geringem Widerstand den geometrisch notwendigen Abständen A und B zwischen diesen Verstärkungsfaserstücken 40 und 42 anpassen können.

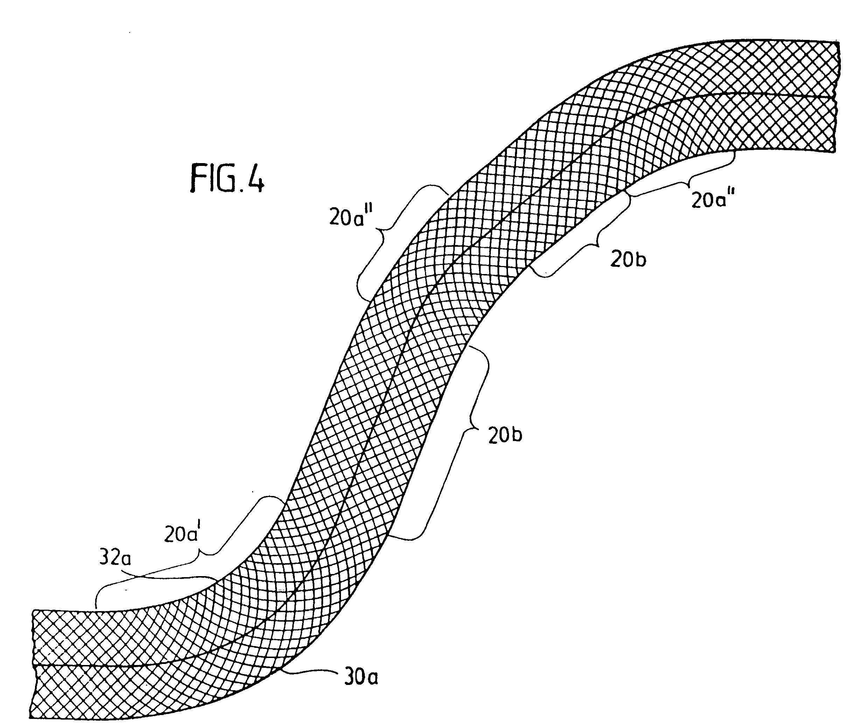

Damit besteht, wie in Fig. 4 nochmals verdeutlicht dargestellt, die Möglichkeit, den erfindungsgemäßen Flachmaterialstreifen so auszulegen, daß geradegerichtete Abschnitte 20b und gekrümmte Abschnitte 20a aufeinanderfolgen, wobei problemlos auch ein Wechsel der Krümmung von einem beispielsweise links gekrümmten Abschnitt 20a' in rechts gekrümmte Abschnitte 20a" möglich ist.

Der Vorteil des erfindungsgemäßen Flachmaterialstreifens ist darin zu sehen, daß jeweils nach dem entsprechenden gekrümmten Abschnitt 20a in den unmittelbar folgenden geradegerichteten Abschnitten der Verlauf der Verstärkungsfaserstücke 40 und 42 dem des geradegerichteten Flachmaterialabschnitts 20b entspricht. Das heißt, daß jeweils die Abstände A zwischen den ersten Verstärkungsfaserstücken 40 und die Abschnitte B zwischen den zweiten Verstärkungsfaserstücken 42 denen des ursprünglich geradegerichteten Flachmaterialstreifens vor dem Drapieren entsprechen, das heißt also daß die gekrümmten Abschnitte 20a, keine Nachwirkung auf die nachfolgenden geradegerichteten Abschnitte haben, sondern die Matte 38 sich in den gekrümmten Abschnitten 20a jeweils durch lokale Änderung der Abstände A und B zwischen den Verstärkungsfaserstücken 40 und 42 den geänderten geometrischen Bedingungen in vollem Umfang anpassen kann.

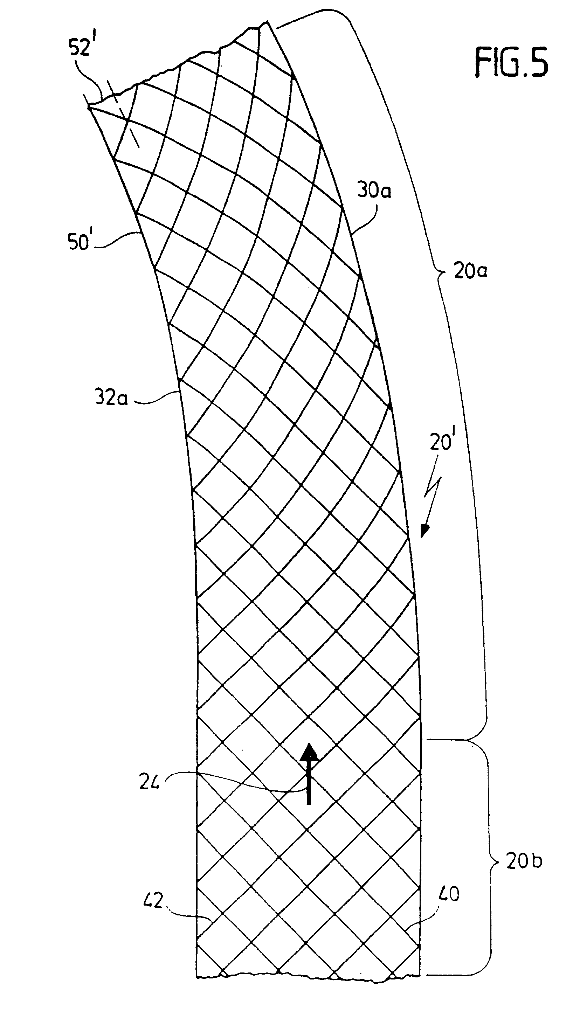

Bei einem zweiten Ausführungsbeispiel des erfindungsgemäßen Flachmaterialstreifens, dargestellt in Fig. 5, sind diejenigen Elemente, die mit denen des ersten Ausführungsbeispiels identisch sind, mit denselben Bezugszeichen versehen, so daß hinsichtlich deren Beschreibung vollinhaltlich auf die Ausführungen hierzu Bezug genommen werden kann.

Im Gegensatz zum ersten Ausführungsbeispiel, dargestellt in Fig. 3 und 4, ist beim zweiten Ausführungsbeispiel, dargestellt in Fig. 5 die Verlegehilfsfaser 50' in einem Streifenbereich 52' angeordnet, der beispielsweise nahe der Außenkontur 32 verläuft, so daß im Extremfall die Verlegehilfsfaser 50' an der Außenkontur 32 entlangläuft.

In diesem Fall ist die Außenkontur 32 aufgrund der Verlegehiifsfaser 50' längeninvariabel, so daß in dem gebogenen Abschnitt 20a zwischen der Verlegehilfsfaser 50' und der Außenkontur 30 die Abstände A und B zwischen den Verstärkungsfaserstücken 40 und 42 zunehmend in Richtung größerer Erstreckung variieren und somit in dem gebogenen Abschnitt 20a der Außenkonturabschnitt 30a eine Längung gegenüber dem Außenkonturabschnitt 32a erfährt, der seinerseits konstant bleibt.

Ein Flachmaterialstreifen gemäß dem zweiten, in Fig. 5 dargestellten Ausführungsbeispiel wird vorzugsweise längs derartiger Konturen verlegt, daß der Verlegehilfsfaser 50' gegenüberliegende Abschnitte der Matte 38 bis zur Außenkontur 30 entweder längeninvariant verlaufen können oder eine Längung oder Dehnung erfahren, jedoch vorzugsweise nicht so, daß eine Verkürzung erforderlich ist, da eine Längung eine Zugbelastung der Verstärkungsfaserstücke 40 und 42 zur Folge hat, für welche die Verstärkungsfaserstücke 40 und 42 ausgelegt sind, während eine Verkürzung des Außenkonturabschnitts 30a mit einer Druckbelastung auf die Verstärkungsfaserstücke 40 und 42 wirken würde und somit es erforderlich macht, daß die Verstärkungsfaserstücke 40 und 42 eine ausreichende Eigensteifigkeit aufweisen, um nicht - wie dies beispielsweise bei biegeschlaffen Fasern der Fall wäre - aufgrund der Druckbelastung einzuknicken oder auszubiegen.

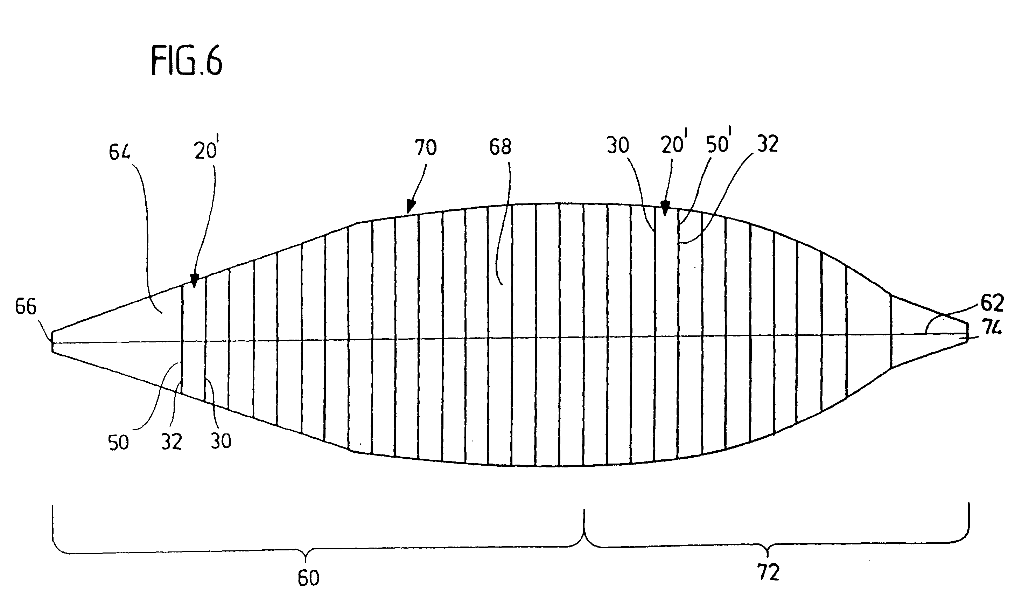

Mit einem Flachmaterialstreifen gemäß dem zweiten Ausführungsbeispiel wäre beispielsweise ein Abschnitt 60 eines symmetrisch zu einer Rotationsachse 62 ausgebildeten sich von einem ersten Ende 66 in Richtung eines Mittenbereichs 68 konisch erweiternden Spannkörpers 70 belegbar, wobei die Verlegehilfsfaser 50' nahe der Außenkontur 32 liegt, welche auf dem Teil der Oberfläche liegt, deren radialer Abstand von der Achse 62 geringer ist als der der anderen Außenkontur 30 (Fig. 6).

Zum Belegen eines zweiten Abschnitts 72 des in Fig. 6 dargestellten symmetrischen Körpers, welcher von dem mittigen Bereich 68 zu einem zweiten Ende 74 verläuft, läßt sich beispielsweise der Flachmaterialstreifen gemäß dem zweiten Ausführungsbeispiel um die Längsrichtung 24 um 180° drehen, so daß die Verlegehilfsfaser 50' nahe der Außenkontur 32 liegt, die dann wiederum auf dem Teil der Fläche aufliegt, der den kleineren radialen Abstand von der Achse 62 aufweist als die Außenkontur 30, die stets auf dem Teil der von dem Flachmaterialstreifen 20' überdeckten Fläche liegt, der den größeren Abstand aufweist.

## Patentansprüche

1. Flachmaterialstreifen zur Herstellung von Faserverbundwerkstücken durch Auslegen desselben auf formgebenden Flächen (14), umfassend in definierter Orientierung zu einer Längsrichtung (24) des Flachmaterialstreifens (20) in einer Streifenfläche (26) nebeneinanderliegend angeordnete Verstärkungsfasern (40, 42), die miteinander zu einer Matte (38) verbunden sind, sowie mindestens eine in der Längsrichtung (24) verlaufende, im wesentlichen undehnbare Verlegehilfsfaser (50),
**dadurch gekennzeichnet, daß** die mindestens eine Verlegehilfsfaser (50) in dem Flachmaterialstreifen (20) innerhalb einessich in der Längsrichtung (24) und über eine Teilbreite des Flachmaterial-Streifens (20) erstreckenden Streifenbereichs (52) liegt, und daß Verstärkungsfasern (40, 42) in einem von dem Streifenbereich (52) bis zu mindestens einer Außenkontur (30, 32) reichenden Bereich in der Matte (38) relativ zueinander bewegbar sind, so daß die Matte (38) in einem lokal begrenzten Bereich in der Längsrichtung (24) gegenüber dem Streifenbereich (52) dehnbar ist.

2. Flachmaterialstreifen nach Anspruch 1, **dadurch gekennzeichnet, daß** der Streifenbereich (52) nahe einer Außenkontur (30, 32) des Flachmaterialstreifens liegt.

3. Flachmaterialstreifen nach Anspruch 1, **dadurch gekennzeichnet, daß** der Streifenbereich (52) ungefähr in einem mittigen Bereich zwischen Außenkonturen (30, 32) des Rachmaterialstreifens (20) liegt.

4. Flachmaterialstreifen nach einem der voranstehenden Ansprüche, **dadurch gekennzeichnet, daß** in dem Streifenbereich (52) eine einzige Verlegehilfsfaser (50) verläuft.

5. Flachmaterialstreifen nach einem der voranstehenden Ansprüche, **dadurch gekennzeichnet, daß** sich die Verlegehilfsfaser (50) durchgehend über die gesamte Länge des jeweils eingesetzten Flachmaterialstreifens (20) erstreckt.

6. Flachmaterialstreifen nach einem der voranstehenden Ansprüche, **dadurch gekennzeichnet, daß** die Verstärkungsfasern als in der Matte ungefähr parallel zueinander verlaufende Verstärkungsfaserstücke (40, 42) angeordnet sind.

7. Flachmaterialstreifen nach einem der voranstehenden Ansprüche, **dadurch gekennzeichnet, daß** die Verstärkungsfasern (40, 42) in der Matte (38) in einer Richtung quer zur Längsrichtung (24) verlaufen.

8. Flachmaterialstreifen nach Anspruch 7, **dadurch gekennzeichnet, daß** die Matte (38) eine erste Schar von ersten Verstärkungsfaserstücken (40) aufweist, die alle bei in seiner Längsrichtung (24) geradegerichtet verlaufendem Flachmaterialstreifen (20) mit der Längsrichtung (24) im wesentlichen denselben positiven spitzen Winkel (α) einschließen und daß die Matte (38) eine zweite Schar von zweiten Verstärkungsfaserstücken (42) aufweist, die alle bei in seiner Längsrichtung (24) geradegerichtet verlaufendem Flachmaterialstreifen (20) mit der Längsrichtung (24) im wesentlichen denselben negativen spitzen Winkel (β) einschließen.

9. Flachmaterialstreifen nach Anspruch 8, **dadurch gekennzeichnet, daß** die Verstärkungsfaserstücke (40) der ersten Schar in der Längsrichtung (24) gesehen aufeinanderfolgend im Abstand (A) voneinander angeordnet sind.

10. Flachmaterialstreifen nach Anspruch 8 oder 9, **dadurch gekennzeichnet, daß** die Verstärkungsfaserstücke (42) der zweiten Schar in der Längsrichtung (24) gesehen in definiertem Abstand (B) aufeinanderfolgend angeordnet sind.

11. Flachmaterialstreifen nach einem der Ansprüche 8 bis 10, **dadurch gekennzeichnet, daß** die ersten Verstärkungsfaserstücke (40) von einer Außenkontur (30) des Flachmaterialstreifens (20) zur gegenüberliegenden Außenkontur (32) verlaufen.

12. Flachmaterialstreifen nach Anspruch 10 oder 11, **dadurch gekennzeichnet, daß** die zweiten Verstärkungsfaserstücke (42) von einer Außenkontur (32) des Flachmaterialstreifens zur gegenüberliegenden Außenkontur (30) verlaufen.

13. Flachmaterialstreifen nach Anspruch 11 oder 12, **dadurch gekennzeichnet, daß** die Verstärkungsfaserstücke (40, 42) an den gegenüberliegenden Außenkonturen (30, 32) enden.

14. Flachmaterialstreifen nach einem der voranstehenden Ansprüche, **dadurch gekennzeichnet, daß** die Verstärkungsfasern (40, 42) webtechnisch miteinander verbunden sind.

15. Flachmaterialstreifen nach einem der voranstehenden Ansprüche, **dadurch gekennzeichnet, daß** die Verstärkungsfasern (40, 42) mit der Verlegehilfsfaser (50) webtechnisch verbunden sind.

16. Flachmaterialstreifen nach einem der voranstehenden Ansprüche, **dadurch gekennzeichnet, daß** die Verstärkungsfasern (40, 42) durch eine Bettungsmasse (60) miteinander verbunden sind.

17. Flachmaterialstreifen nach einem der voranstehenden Ansprüche, **dadurch gekennzeichnet, daß** die Verlegehilfsfaser (50) mit den Verstärkungsfasem (40, 42) mittels einer Bettungsmasse (60) verbunden ist.

18. Flachmaterialstreifen nach einem der voranstehenden Ansprüche, **dadurch gekennzeichnet, daß** die Verstärkungsfaser und die Verlegehilfsfaser mit der Bettungsmasse (60) imprägniert sind.

19. Verfahren zum Herstellen eines Faserverbundwerkstücks, **dadurch gekennzeichnet, daß** Flachmaterialstreifen (20) gemäß einem der Ansprüche 1 bis 18 relativ zur Form des herzustellenden Faserverbundwerkstücks mit einem derartigen Verlauf zur formgebenden Fläche (14) gelegt werden, daß die Belastungen des Faserverbundwerkstücks zu Zugbelastungen oder Druckbelastungen der Verstärkungsfasern (40, 42) führen.

20. Verfahren nach Anspruch 19, **dadurch gekennzeichnet, daß** der Flachmaterialstreifen (20) mit einem derartigen Verlauf zur formgebenden Fläche (14) ausgelegt wird, daß eine Dehnung der Matte (38) in der Längsrichtung (24) nur im Bereich einer der Außenkonturen (30, 32) erforderlich ist.

21. Verfahren nach Anspruch 20, **dadurch gekennzeichnet, daß** die auf einer Seite des Streifenbereichs (52) liegende Außenkontur (30) zumindest abschnittsweise (30a) eine Dehnung erfährt, während die auf der anderen Seite des Streifenbereichs (52) liegende Außenkontur (32) zumindest abschnittsweise (32a) eine Verkürzung erfährt.

## Claims

1. Strip of flat material for producing fibre composite workpieces by laying out the strip of flat material on shaping surfaces (14), comprising reinforcement fibres (40, 42) arranged alongside one another in a surface (26) of the strip in a defined orientation in relation to a longitudinal direction (24) of the strip (20) of flat material and joined to one another to form a mat (38), and at least one substantially inextensible auxiliary laying fibre (50) extending in the longitudinal direction (24), **characterized in that** the at least one auxiliary laying fibre (50) lies in the strip (20) of flat material inside a strip area (52) extending in the longitudinal direction (24) over a partial width of the strip (20) of flat material, and **in that** reinforcement fibres (40, 42) are movable relative to one another in the mat (38) in an area extending from the area (52) of the strip to at least one outer contour (30, 32) so that the mat (38) is extensible in the longitudinal direction (24) in a locally limited area in relation to the area (52) of the strip.

2. Strip of flat material in accordance with Claim 1, **characterized in that** the area (52) of the strip lies close to an outer contour (30, 32) of the strip of flat material.

3. Strip of flat material in accordance with Claim 1, **characterized in that** the area (52) of the strip lies approximately in a central area between outer contours (30, 32) of the strip (20) of flat material.

4. Strip of flat material in accordance with any one of the preceding claims, **characterized in that** a single auxiliary laying fibre (50) extends in the area (52) of the strip.

5. Strip of flat material in accordance with any one of the preceding claims, **characterized in that** the auxiliary laying fibre (50) extends continuously over the entire length of the strip (20) of fiat material respectively used.

6. Strip of flat material in accordance with any one of the preceding claims, **characterized in that** the reinforcement fibres are arranged as reinforcement fibre pieces (40, 42) extending approximately parallel to one another in the mat.

7. Strip of flat material in accordance with any one of the preceding claims, **characterized in that** the reinforcement fibres (40, 42) extend in a direction transverse to the longitudinal direction (24) in the mat (38).

8. Strip of flat material in accordance with Claim 7, **characterized in that** the mat (38) comprises a first group of first reinforcement fibre pieces (40) which, in the case of a strip (20) of flat material extending rectilinearly in its longitudinal direction (24), all include substantially the same positive acute angle (α) with the longitudinal direction (24), and **in that** the mat (38) comprises a second group of second reinforcement fibre pieces (42) which, in the case of a strip (20) of flat material extending rectilinearly in its longitudinal direction (24), all include substantially the same negative acute angle (β) with the longitudinal direction (24).

9. Strip of flat material in accordance with Claim 8, **characterized in that** the reinforcement fibre pieces (40) of the first group are arranged so as to follow one another at a distance (A) from one another, viewed in the longitudinal direction (24).

10. Strip of flat material in accordance with Claim 8 or 9, **characterized in that** the reinforcement fibre pieces (42) of the second group are arranged so as to follow one another at a defined distance (B), viewed in the longitudinal direction (24).

11. Strip of flat material in accordance with any one of Claims 8 to 10, **characterized in that** the first reinforcement fibre pieces (40) extend from an outer contour (30) of the strip (20) of flat material to the opposite outer contour.

12. Strip of flat material in accordance with Claim 10 or 11, **characterized in that** the second reinforcement fibre pieces (42) extend from an outer contour (32) of the strip of flat material to the opposite outer contour (30).

13. Strip of flat material in accordance with Claim 11 or 12, **characterized in that** the reinforcement fibre pieces (40, 42) end at the opposite outer contours (30, 32).

14. Strip of flat material in accordance with any one of the preceding claims, **characterized in that** the reinforcement fibres (40, 42) are joined to one another by a weaving technique.

15. Strip of flat material in accordance with any one of the preceding claims, **characterized in that** the reinforcement fibres (40, 42) are joined to the auxiliary laying fibre (50) by a weaving technique.

16. Strip of flat material in accordance with any one of the preceding claims, **characterized in that** the reinforcement fibres (40, 42) are joined to one another by a bedding material (60).

17. Strip of flat material in accordance with any one of the preceding claims, **characterized in that** the auxiliary laying fibre (50) is joined to the reinforcement fibres (40, 42) by a bedding material (60).

18. Strip of flat material in accordance with any one of the preceding claims, **characterized in that** the reinforcement fibre and the auxiliary laying fire are impregnated with the bedding material (60).

19. Process for producing a fibre composite workpiece, **characterized in that** strips (20) of flat material in accordance with any one of claims 1 to 18 are laid, relative to the shape of the fibre composite workpiece to be produced, so as to extend in such a way in relation to the shaping surface (14) that the loads on the fibre composite workpiece lead to tensile loads or pressure loads on the reinforcement fibres (40, 42).

20. Process in accordance with claim 19, **characterized in that** the strip (20) of flat material is laid out so as to extend in such a way in relation to the shaping surface (14) that an extension of the mat (38) in the longitudinal direction (24) is only necessary in the area of one of the outer contours (30, 32).

21. Process in accordance with claim 20, **characterized in that** the outer contour (30) lying on one side of the area (52) of the strip undergoes an extension at least area-wise (30a), whereas the outer contour (32) lying on the other side of the area (52) of the strip undergoes a shortening at least area-wise (32a).

## Revendications

1. Bande de matériau plat pour la fabrication de pièces composites en fibres en déployant ladite bande sur des surfaces (14) de mise en forme, comprenant des fibres de renfort (40, 42) qui sont agencées en juxtaposition dans une surface (26) de la bande, avec orientation bien définie par rapport à une direction longitudinale (24) de ladite bande (20) de matériau plat, et forment associativement un tressage (38), ainsi qu'au moins une fibre auxiliaire d'appareillage (50) essentiellement non expansible, s'étendant dans la direction longitudinale (24), **caractérisée par le fait que** la fibre auxiliaire d'appareillage (50) prévue au minimum se trouve, dans la bande (20) de matériau plat, à l'intérieur d'une zone (52) s'étendant dans la direction longitudinale (24) et sur une largeur partielle de ladite bande (20) de matériau plat ; et **par le fait que** des fibres de renfort (40, 42) sont douées de mobilité relative, dans le tressage (38), dans une région s'étendant depuis la zone (52) de la bande jusqu'à au moins un contour extérieur (30, 32), de telle sorte que ledit tressage (38) soit expansible dans la direction longitudinale (24), vis-à-vis de ladite zone (52) de la bande, dans une plage localement limitée.

2. Bande de matériau plat selon la revendication 1, **caractérisée par le fait que** la zone (52) se trouve à proximité d'un contour extérieur (30, 32) de ladite bande de matériau plat.

3. Bande de matériau plat selon la revendication 1, **caractérisée par le fait que** la zone (52) se trouve approximativement dans une région centrale, entre des contours extérieurs (30, 32) de ladite bande (20) de matériau plat.

4. Bande de matériau plat selon l'une des revendications précédentes, **caractérisée par le fait qu'**une unique fibre auxiliaire d'appareillage (50) s'étend dans la zone (52) de ladite bande.

5. Bande de matériau plat selon l'une des revendications précédentes, **caractérisée par le fait que** la fibre auxiliaire d'appareillage (50) s'étend, de manière continue, sur toute la longueur de la bande (20) de matériau plat respectivement utilisée.

6. Bande de matériau plat selon l'une des revendications précédentes, **caractérisée par le fait que** les fibres de renfort sont disposées sous la forme de pièces fibreuses de renfort (40, 42) s'étendant à peu près parallèlement les unes aux autres dans le tressage.

7. Bande de matériau plat selon l'une des revendications précédentes, **caractérisée par le fait que** les fibres de renfort (40, 42) s'étendent, dans le tressage (38), dans une direction transversale par rapport à la direction longitudinale (24).

8. Bande de matériau plat selon la revendication 7, **caractérisée par le fait que** le tressage (38) présente un premier assemblage de premières pièces fibreuses de renfort (40) qui, dans le cas d'une bande (20) de matériau plat s'étendant avec orientation rectiligne dans sa direction longitudinale (24), décrivent toutes pour l'essentiel le même angle aigu positif (α) avec la direction longitudinale (24) ; et **par le fait que** ledit tressage (38) présente un second assemblage de secondes pièces fibreuses de renfort (42) qui, dans le cas d'une bande (20) de matériau plat s'étendant avec orientation rectiligne dans sa direction longitudinale (24), décrivent toutes pour l'essentiel le même angle aigu négatif (β) avec la direction longitudinale (24).

9. Bande de matériau plat selon la revendication 8, **caractérisée par le fait que** les pièces fibreuses de renfort (40) du premier assemblage sont agencées en succession avec espacement mutuel (A), observées dans la direction longitudinale (24).

10. Bande de matériau plat selon la revendication 8 ou 9, **caractérisée par le fait que** les pièces fibreuses de renfort (42) du second assemblage sont agencées en succession avec espacement bien défini (B), observées dans la direction longitudinale (24).

11. Bande de matériau plat selon l'une des revendications 8 à 10, **caractérisée par le fait que** les premières pièces fibreuses de renfort (40) s'étendent depuis un contour extérieur (30) de ladite bande (20) de matériau plat, jusqu'au contour extérieur (32) tourné à l'opposé.

12. Bande de matériau plat selon la revendication 10 ou 11, **caractérisée par le fait que** les secondes pièces fibreuses de renfort (42) s'étendent depuis un contour extérieur (32) de ladite bande de matériau plat, jusqu'au contour extérieur (30) tourné à l'opposé.

13. Bande de matériau plat selon la revendication 11 ou 12, **caractérisée par le fait que** les pièces fibreuses de renfort (40, 42) s'achèvent sur les contours extérieurs (30, 32) tournés à l'opposé.

14. Bande de matériau plat selon l'une des revendications précédentes, **caractérisée par le fait que** les fibres de renfort (40, 42) sont reliées les unes aux autres par des techniques de tissage.

15. Bande de matériau plat selon l'une des revendications précédentes, **caractérisée par le fait que** les fibres de renfort (40, 42) sont reliées, par des techniques de tissage, à la fibre auxiliaire d'appareillage (50).

16. Bande de matériau plat selon l'une des revendications précédentes, **caractérisée par le fait que** les fibres de renfort (40, 42) sont reliées les unes aux autres par une masse d'enrobage (60).

17. Bande de matériau plat selon l'une des revendications précédentes, **caractérisée par le fait que** la fibre auxiliaire d'appareillage (50) est reliée aux fibres de renfort (40, 42) au moyen d'une masse d'enrobage (60).

18. Bande de matériau plat selon l'une des revendications précédentes, **caractérisée par le fait que** la fibre de renfort et la fibre auxiliaire d'appareillage sont imprégnées par la masse d'enrobage (60).

19. Procédé de fabrication d'une pièce composite en fibres, **caractérisé par le fait que** des bandes (20) de matériau plat conformés à l'une des revendications 1 à 18 sont agencées, par rapport à la forme de ladite pièce composite en fibres devant être fabriquée, avec une orientation relative à la surface définissant la forme de façon telle que les contraintes imposées à ladite pièce composite en fibres se traduisent par des efforts de traction ou des efforts de pression des fibres de renfort (40, 42).

20. Procédé selon la revendication 19, **caractérisé par le fait que** la bande (20) de matériau plat est agencée avec une orientation relative à la surface définissant la forme de façon telle qu'une expansion du tressage (38), dans la direction longitudinale (24), soit nécessaire uniquement dans la région de l'un des contours extérieurs (30, 32).

21. Procédé selon la revendication 20, **caractérisé par le fait que** le contour extérieur (30) situé sur un côté de la zone (52) de la bande subit une expansion, au moins par zones (30a), tandis que le contour extérieur (32) situé sur l'autre côté de ladite zone (52) subit un raccourcissement, au moins par zones (32a).
